# FASCICULE DE BREVET EUROPEEN

(11) **EP 1 720 692 B1**
(45) Date de publication et mention de la délivrance du brevet: **16.10.2013**
(21) Numéro de dépôt: 05708855.1
(22) Date de dépôt: 26.02.2005
(51) Int. Cl.: B29B 11/10, B29B 11/14, B29C 43/20, B29C 47/20

(54) **DOSE MULTICOUCHE AYANT UNE SURFACE CONCAVE, PROCEDE DE FABRICATION DE LADITE DOSE MULTICOUCHE ET DISPOSITIF POUR LA FABRICATION DE LADITE DOSE MULTICOUCHE**
MEHRLAGIGE STRUKTUR MIT KONKAVER FLÄCHE, VERFAHREN ZUR HERSTELLUNG DER STRUKTUR UND VORRICHTUNG ZUR HERSTELLUNG DER STRUKTUR
MULTILAYER DOSE HAVING A CONCAVE SURFACE, PROCESS FOR MAKING SAID MULTILAYER DOSE AND DEVICE FOR MANUFACTURING SAID MULTILAYER DOSE

(30) Priorité: 01.03.2004 CH 3362004; 04.10.2004 CH 16192004; 08.12.2004 CH 20342004; 08.12.2004 CH 20332004
(43) Date de publication de la demande: 15.11.2006
(73) Titulaire: Aisapack Holding SA, 1896 Vouvry (CH)
(72) Inventeur: THOMASSET, Jacques, AISAPACK S.A., CH-1896 Vouvry (CH)
(74) Mandataire: Grosfillier, Philippe
(86) Numéro de dépôt international: PCT/IB2005/050707
(87) Numéro de publication internationale: WO 2005/084903

(56) Documents cités:
- EP-A- 0 468 261
- FR-A- 2 299 957
- FR-A- 2 582 253
- US-A- 4 154 893
- US-A- 4 419 412
- US-A- 5 110 519
- US-A1- 2002 182 351
- PATENT ABSTRACTS OF JAPAN vol. 014, no. 305 (M-0992), 29 juin 1990 (1990-06-29) & JP 02 098415 A (HIROSHI UENO), 10 avril 1990 (1990-04-10) cité dans la demande

## Description

### Domaine de l'invention

La présente invention concerne une méthode de réalisation d'objets multicouche par compression moulage d'une dose multicouche.

### Etat de la technique

Un procédé de fabrication d'objets multicouche par compression moulage d'une dose multicouche est notamment décrit dans le brevet FR 2 299 957.
Le brevet US 4 876 052 décrit une dose multicouche cylindrique (figure 1) caractérisée par le fait qu'une résine fonctionnelle 3 est complètement emprisonnée à l'intérieur d'une résine synthétique 2. La résine fonctionnelle et la résine extérieure sont de nature différente. Par exemple, la résine fonctionnelle présente des propriétés barrières aux gaz élevées, tandis que la résine formant la couche externe est choisie pour ses propriétés mécaniques et hygiéniques. Ces doses multicouches permettent d'obtenir des objets multicouche par compression moulage de ladite dose. Cependant, les objets obtenus selon la méthode décrite dans le brevet US 4 876 052 nécessitent une proportion importante de résine fonctionnelle dans l'objet; ce qui engendre deux inconvénients majeurs ; le premier étant un coût prohibitif et le second une résistance aux sollicitations mécaniques amoindrie. L'absence d'adhésion entre la résine fonctionnelle et la résine extérieure réduit la solidité de l'objet et crée un risque de dé cohésion de la couche extérieure. Un autre inconvénient du brevet US 4 876 052 réside dans le fait que l'on ne peut que faiblement ajuster la quantité respective des résines 2 et 3 ; ces quantités étant fixées par la géométrie de l'objet et par les écoulements lors de la compression de la dose.

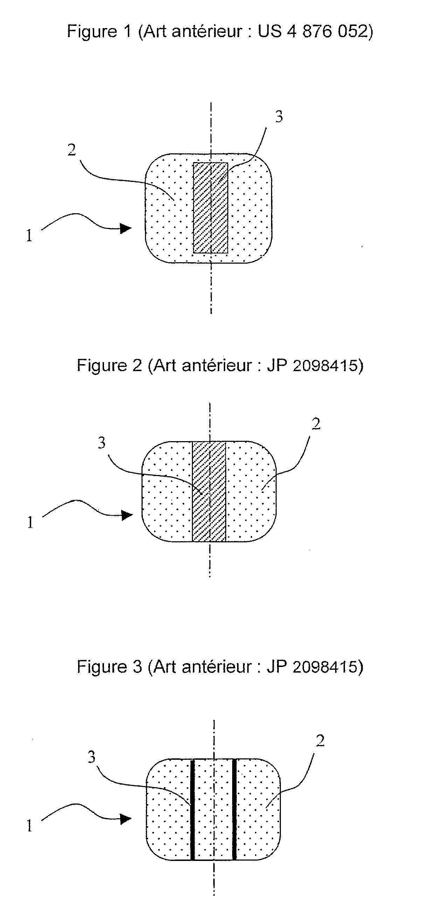

Le brevet Japonais JP 2098415 propose de réaliser un objet multicouche par compression moulage en partant d'une dose cylindrique (figure 2) caractérisée par le fait que la résine synthétique 2 couvre seulement les faces latérales de la résine fonctionnelle 3. Le moulage par compression de cette dose selon son axe de symétrie conduit à un objet présentant une structure multicouche caractérisée par le fait que la résine synthétique 2 emprisonne partiellement la résine fonctionnelle 3. Cependant, les objets multicouches réalisés à partir de deux résines selon le brevet JP 2098415 présentent deux inconvénients majeur ; le premier étant d'avoir la résine fonctionnelle 3 exposée en surface centrale de l'objet sur au moins 10% de la surface totale de l'objet ; et le second étant de nécessiter une quantité de résine fonctionnelle 3 dans l'objet d'au moins 30% de la quantité totale de résine. Cela conduit d'une part à des objets ayant un coût prohibitif, et d'autre part à des objets présentant des propriétés mécaniques fortement modifiées principalement au centre de l'objet. Un autre inconvénient du brevet JP 2098415 réside dans le fait que l'on ne peut que faiblement ajuster la quantité respective des résines 2 et 3, ces quantités étant fixées par la géométrie de l'objet et les écoulements lors de la compression de la dose.

Il est proposé dans le brevet JP 2098415 d'utiliser une dose cylindrique comportant 3 couches (figure 3) pour remédier en partie aux inconvénients précités. Cette dose est constituée d'une première résine formant la partie centrale de la dose, d'une résine fonctionnelle 3 couvrant seulement les faces latérales de la première résine, et d'une troisième résine 2 couvrant seulement les faces latérales de la résine fonctionnelle. L'écrasement de cette dose composite selon son axe de symétrie conduit à un objet multicouche. L'utilisation d'une dose tri-couche présente l'avantage de réduire la quantité de résine fonctionnelle 3 utilisée et conduit à des objets présentant des propriétés mécaniques faiblement modifiées par rapport au même objet comportant une seule résine 2. Cette méthode permet d'ajouter une couche adhésive entre les résines de nature différente ; par conséquent la cohésion et la solidité de l'objet est améliorée. Cependant, la résine fonctionnelle 3 ne couvre pas la partie centrale de l'objet multicouche ce qui conduit à des objets sans propriété barrière proche de l'axe de symétrie sur une surface d'au moins 10% de la surface de l'objet. Cette zone centrale de l'objet non couverte par la couche de résine barrière 3 diminue les performances barrière de l'objet et rend cette solution moins performante.

### Objet de l'invention

La présente invention permet de réaliser des objets multicouches par compression moulage en remédiant aux problèmes précités. Cette méthode permet notamment d'utiliser un dispositif de compression sans modification par rapport au dispositif utilisé pour réaliser des objets monocouche.

### Résumé de l'invention

L'invention consiste en une dose multicouche présentant un axe de symétrie pour la réalisation d'objets multicouches par compression moulage, constituée d'une première résine synthétique et d'au moins une fine couche fonctionnelle emprisonnée dans ladite première résine ; la dose multicouche étant caractérisée par le fait qu'une partie de sa surface est concave. La surface concave peut être disposée sur la surface externe de la dose ou sur sa surface interne si cette dernière comporte un orifice. L'orifice pouvant être un passage ou une cavité.

L'invention est particulièrement utile pour réaliser des objets multicouches avec un orifice, tels que des têtes de tubes ; ou sans orifice, tels que des bouchons.

### Description détaillée de l'invention

L'invention sera mieux comprise ci-après au moyen d'une description détaillée des exemples illustrés par les figures suivantes.

### Brève description des figures

Les figures 1 à 3 décrivent les doses multicouches décrites dans l'art antérieur pour réaliser des objets multicouches par compression moulage.
La figure 1 montre une dose bicouche réalisée selon le brevet US 4 876 052
La figure 2 montre une dose bicouche utilisée dans le brevet JP 2098415.
La figure 3 illustre une dose comportant 3 couches décrite dans le brevet JP 2098415.
La figure 4 montre une dose multicouche selon un premier mode de l'invention. Cette dose comprend une surface concave formant un orifice centré sur l'axe de symétrie.
La figure 5 montre un objet multicouche présentant un orifice et réalisé à partir de la compression de la dose illustrée figure 4.
La figure 6 montre une dose multicouche selon un deuxième mode de l'invention. Cette dose comprend une surface concave formant une cavité centrée sur l'axe de symétrie.
La figure 7 illustre un objet multicouche sans orifice obtenu à partir de la compression de la dose illustrée figure 6
La figure 8 montre une dose multicouche combinant le premier et le deuxième mode de l'invention. La dose comprend une surface concave formant une cavité et un orifice.
La figure 9 illustre une dose présentant une cavité et correspondant au deuxième mode de l'invention.
La figure 10 montre une tête de tube réalisée selon l'invention.
La figure 11 montre un bouchon réalisé selon l'invention.
Les figures 12 à 17 illustrent des méthodes de réalisation de doses multicouches ayant une partie de leur surface concave.

### Description détaillée des figures

L'invention décrit des géométries de doses multicouches avantageuses pour réaliser des objets multicouches. Il a été trouvé que les doses ayant des surfaces concaves étaient particulièrement avantageuses.

L'invention décrit des doses multicouches selon la revendication 1 ayant au moins une partie de leur surface concave. Selon un premier mode de l'invention la surface concave de ladite dose forme un orifice et selon un deuxième mode de l'invention la surface concave de ladite dose forme une cavité. L'invention permet des réaliser une grande diversité d'objets multicouches avec ou sans orifice.

L'invention concerne aussi les méthodes de réalisation desdites doses selon la revendication 13.

L'invention décrit également les objets multicouches obtenus par le moulage par compression desdites doses selon la revendication 6.

L'invention concerne également un dispositif pour la fabrication desdites doses selon la revendication 14.

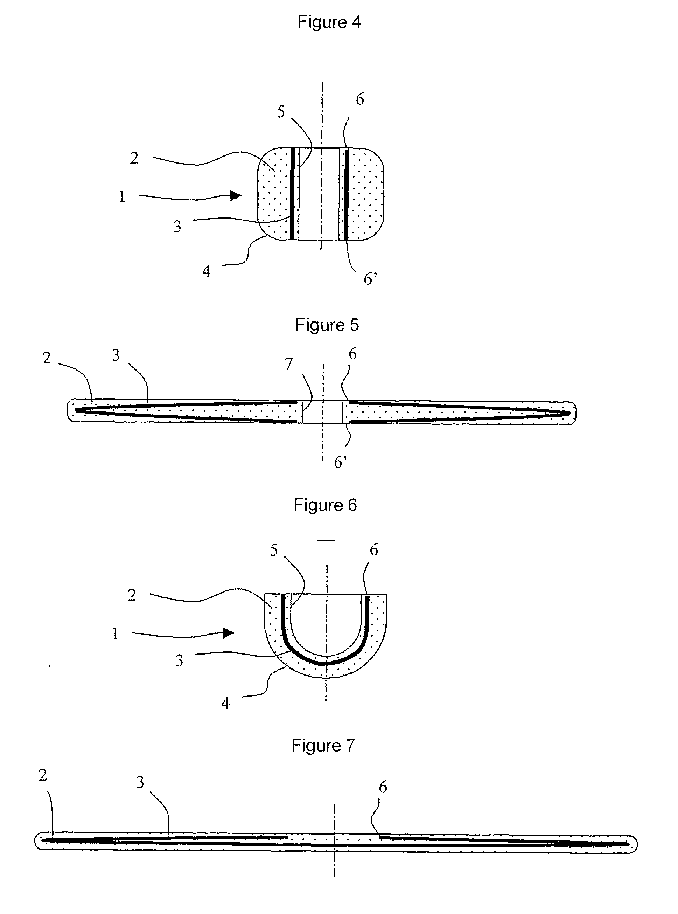

La figure 4 illustre un premier exemple de dose multicouche correspondant à l'invention. Cette dose 1 est constituée d'une fine couche de résine fonctionnelle 3 emprisonnée dans une résine 2. La géométrie de la dose 1 est définie par une surface convexe 4 décrivant le pourtour de ladite dose, et par une surface concave 5 formant un orifice, ledit orifice étant généralement centré sur l'axe de symétrie de ladite dose.

Une dose selon le premier mode de l'invention est particulièrement avantageuse pour réaliser des objets multicouches présentant un orifice, le diamètre de l'orifice de l'objet étant inférieur ou égal au diamètre de l'orifice de la dose. En général, il est favorable d'utiliser une dose dont l'orifice est sensiblement du même diamètre que l'orifice de l'objet à réaliser.

Une dose selon le premier mode de l'invention (figure 4) permet également de réaliser de façon avantageuse des objets multicouches sans orifice. Dans le brevet JP2098415, il est décrit l'utilisation d'une dose multicouche cylindrique pour former un objet sans orifice. Cependant, les doses cylindriques telles que décrites dans le brevet JP2098415 ne permettent pas d'obtenir une couche fonctionnelle répartie convenablement dans la partie centrale de l'objet. En effet, la compression des doses cylindriques décrites dans le brevet JP2098415 crée un écoulement vers la périphérie de l'objet et entraîne donc la couche fonctionnelle vers la périphérie dudit objet. Il n'est donc pas possible d'entraîner la couche fonctionnelle vers le centre dudit objet. Une dose selon le premier mode de l'invention, présentant une surface concave formant un orifice, permet de créer un écoulement vers la périphérie et vers le centre de l'objet. Aussi, la couche de résine fonctionnelle 3 est entraînée conjointement vers la périphérie et vers le centre de l'objet, ce qui permet d'obtenir un objet multicouche ayant des propriétés barrières améliorées.

Les expériences ont montré que la position radiale de la fine couche de résine fonctionnelle dans la dose était fonction du taux de compression, de la géométrie de l'objet, de la rhéologie des résines et des paramètres liés au procédé. La position de la couche fonctionnelle dans la dose permet après compression de couvrir de façon optimale la surface de l'objet, c'est à dire la périphérie et le centre.

La fine couche de résine fonctionnelle 3 améliore l'imperméabilité de l'objet aux gaz ou aux arômes. En général, il est avantageux d'utiliser une faible quantité de résine fonctionnelle pour des raisons de coût et de propriétés d'usage. Habituellement la quantité de résine fonctionnelle est inférieure à 20% du volume de l'objet, et de préférence cette quantité est inférieure à 10%.

Les extrémités de la couche de résine fonctionnelle 3 peuvent être affleurantes en surface de ladite dose, mais généralement ladite couche de résine fonctionnelle 3 se trouve totalement encapsulée dans la résine 2.

La figure 5 illustre un objet réalisé à partir d'une dose correspondant au premier mode de l'invention. Cet objet comporte un orifice 7. La couche de résine fonctionnelle 3 est emprisonnée dans la résine 2 et forme un pli proche de la périphérie de l'objet. Les extrémités 6 et 6' de la couche 3 se situent à proximité de l'orifice 7 et sont généralement absentes de la surface de l'objet, de sorte que la couche 3 se trouve entièrement emprisonnée dans la résine 2. La dose selon le premier mode de l'invention permet de réaliser des objets comprenant un orifice et ayant une couche fonctionnelle 3 répartie dans au moins 90% dudit objet.

La figure 6 présente une dose multicouche selon le second mode de l'invention. Cette dose 1 est constituée d'une fine couche de résine fonctionnelle 3 emprisonnée dans une résine 2. La géométrie de la dose 1 est définie par une surface convexe 4 décrivant le pourtour de ladite dose, et par une surface concave 5 formant une cavité, ladite cavité étant généralement centrée sur l'axe de symétrie de ladite dose. Comme il est illustré sur la figure 6 la couche de résine fonctionnelle 3 ne présente qu'une seule extrémité libre 6, ladite extrémité pouvant être affleurante en surface de la dose ou emprisonnées dans la résine 2. Une dose selon le second mode de l'invention est particulièrement avantageuse pour réaliser des objets sans orifice. La figure 6 montre la couche fonctionnelle 3 emprisonnée dans la résine 2, les couches de résine 2 situées de part et d'autre de la couche fonctionnelle 3 étant généralement d'épaisseur sensiblement constante. Le second mode de l'invention ne se limite pas à la géométrie de dose illustrée figure 6. En fonction du dispositif utilisé pour réaliser lesdites doses multicouches, il est observé que les épaisseurs respectives des couches n'était pas forcément constant, il en résulte donc une grande variété de dose. Toutes les doses obtenues selon le second mode de l'invention présentent une surface concave 5 formant une cavité. La position de la couche fonctionnelle dans la dose est définie pour que ladite couche se propage jusqu'à la périphérie de l'objet lors de la compression. Lorsque l'on rapproche la couche fonctionnelle 3 de la surface convexe 4 de la dose, la couche fonctionnelle se rapproche de la périphérie de l'objet.

La figure 7 illustre un objet multicouche obtenu par la compression d'une dose réalisée selon le second mode de l'invention. Cet objet multicouche présente des propriétés barrières améliorées parce que la couche fonctionnelle 3 est présente dans tout l'objet aussi bien dans la partie centrale que dans la périphérie. La couche fonctionnelle 3 forme un pli proche de la périphérie dudit objet. La couche fonctionnelle 3 est préférentiellement totalement emprisonnée dans la résine 2, même au niveau de son extrémité libre 6.

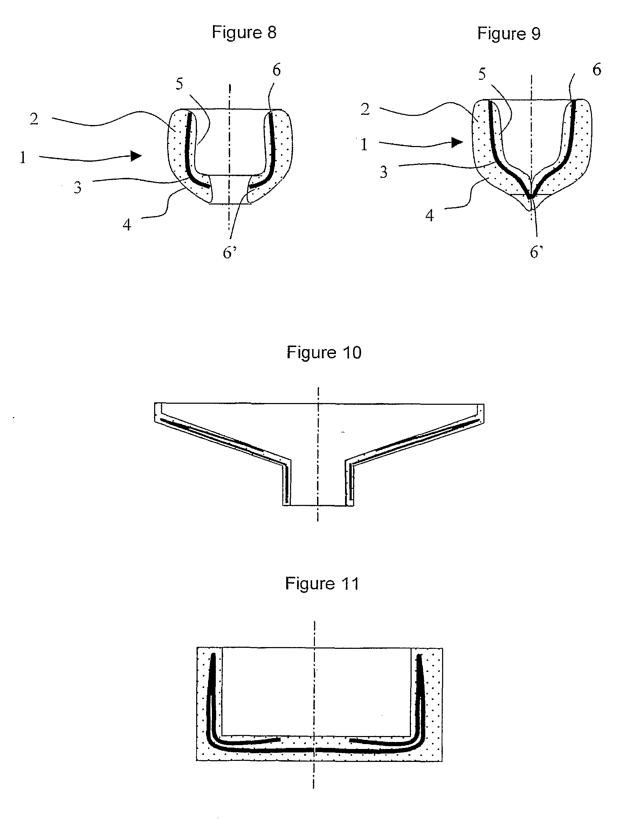

La figure 8 illustre une dose résultant de la combinaison du premier et du deuxième mode de l'invention. Cette dose 1 est constituée d'une fine couche de résine fonctionnelle 3 emprisonnée dans une résine 2. La géométrie de la dose 1 est définie par une surface convexe 4 décrivant le pourtour de ladite dose, et par une surface concave 5 formant une cavité et un orifice, ladite cavité et ledit orifice étant généralement centrés sur l'axe de symétrie de ladite dose. Comme il est illustré sur la figure 8 la couche de résine fonctionnelle 3 présente deux extrémités 6 et 6', lesdites extrémités pouvant être affleurante en surface de la dose ou emprisonnées dans la résine 2. La dose présentée figure 8 est particulièrement avantageuse pour réaliser des objets multicouches avec ou sans orifice. La position de la couche fonctionnelle dans la dose est définie pour que ladite couche se propage jusqu'à la périphérie de l'objet lors de la compression. Lorsque l'on rapproche la couche fonctionnelle 3 de la surface convexe 4 de la dose, la couche fonctionnelle se rapproche de la périphérie de l'objet. Le diamètre de d'orifice et le volume de la cavité sont optimisés pour que la couche fonctionnelle se propage conjointement vers le centre et vers la périphérie dudit objet.

La figure 9 illustre une dose présentant une cavité et correspondant au deuxième mode de l'invention. Cette dose 1 est constituée d'une fine couche de résine fonctionnelle 3 emprisonnée dans une résine 2. La géométrie de la dose 1 est définie par une surface convexe 4 décrivant le pourtour de ladite dose, et par une surface concave 5 formant une cavité, ladite cavité et ledit orifice étant généralement centrés sur l'axe de symétrie de ladite dose. Comme il est illustré sur la figure 8 la couche de résine fonctionnelle 3 présente deux extrémités 6 et 6', lesdites extrémités pouvant être affleurante en surface de la dose ou emprisonnées dans la résine 2. La dose présentée figure 8 est particulièrement avantageuse pour réaliser des objets multicouches sans orifice. L'extrémité 6' de la couche fonctionnelle 3 forme une éventuelle discontinuité formant un trou dans ladite couche. Afin d'obtenir des propriétés barrières optimales, il est avantageux de supprimer ou réduire cette discontinuité.

La figure 10 montre une tête de tube réalisée à partir d'une dose multicouche ayant une partie de sa surface concave et formant un orifice. La figure 11 montre un bouchon réalisé à partir d'une dose multicouche ayant une partie de sa surface concave et formant une cavité. Ces objets présentent la particularité de présenter une fine couche de résine fonctionnelle couvrant toute la surface de l'objet et formant un repli au niveau de sa périphérie. Ces objet sont obtenus en comprimant la dose multicouche dans un dispositif de compression simple ne nécessitant pas de modification par rapport au dispositif de compression qui serait utilisé pour réaliser le même objet à partir d'une dose monocouche. Des dispositifs de compression plus complexes mettant en mouvement des parties de l'outillage peuvent être utilisés pour favoriser l'écoulement des résines dans une direction. Ces dispositifs peuvent être utile pour des géométries d'objets complexes et pour optimiser la propagation de la couche barrière dans tout l'objet.

Les objets 10 et 11 ont été réalisés avec une fine couche de résine barrière (EVOH) emprisonnée dans une résine de polyéthylène (PE). Ces objets présentent une grande imperméabilité à l'oxygène ou aux arômes.

Pour la simplicité de l'exposé de l'invention, les figures ont volontairement été représentées avec seulement une couche fonctionnelle 3 emprisonnée dans une seconde résine 2. Il est connu que l'association de seulement deux résines ne permet généralement pas d'obtenir une adhésion suffisante à l'interface entre les deux résines. Aussi, il est courant d'utiliser des couches intermédiaires adhésives permettant d'associer des résines de nature différente tout en garantissant un bon niveau d'adhésion entre les couches. Ainsi, l'insertion d'une couche adhésive de part et d'autre de la couche barrière évite les éventuels problèmes de délamination ou décohésion dans les objets multicouches. Les couches adhésives et barrière sont parallèles et en faible quantité. L'ensemble des couches adhésives formant la couche fonctionnelle 3 représente généralement une quantité de résine inférieure à 15% du volume total de résine formant la dose, et préférentiellement une quantité intérieure à 10%. La présente invention ne se limite donc pas à des doses 3 couches telles que présentées figures 4, 6, 8 et 9 mais comportent plus généralement 5 couches ou plus.

Les résines utilisées dans le cadre de l'invention correspondent aux résines thermoplastiques couramment utilisés, et plus particulièrement celles utilisées dans le secteur de l'emballage. Parmi les résines barrières qui peuvent être utilisées pour former la couches fonctionnelle 3, on peut citer les copolymères d'éthylène vinyl alcool (EVOH), les polyamides tels que le Nylon-MXD6, les copolymères acrylonitrile methyl acrylate (BAREX), les polymères fluorés tels que le PVDF. Citons également quelques résines pouvant être utilisées pour former la structure 2 de l'objet : polyéthylène (PE), polypropylène (PP), polystyrène (PS), polyamide (PA), polyester (PET). Cette liste n'est pas exhaustive. Lors du choix des résines, il est important de sélectionner des produits ayant des viscosités voisines. En général, il est préférable d'utiliser des résines qui à la température de travail présentent un rapport de viscosité inférieur à 10, et de préférence on choisira un rapport de viscosité inférieur à 3.

La méthode de moulage par compression consiste à alimenter une dose multicouche de résines synthétiques à l'état fondu dans la cavité d'un moule ; à former l'objet par moulage par compression de ladite dose dans la cavité dudit moule ; à refroidir l'objet puis à le démouler.

L'invention permet de réaliser des objets avec une très fine couche fonctionnelle, ladite couche fonctionnelle pouvant représenter moins de 5% du volume de l'objet.

Les méthodes de réalisation d'objets multicouches selon l'invention nécessitent la réalisation de doses multicouches ayant une partie de leur surface concave.

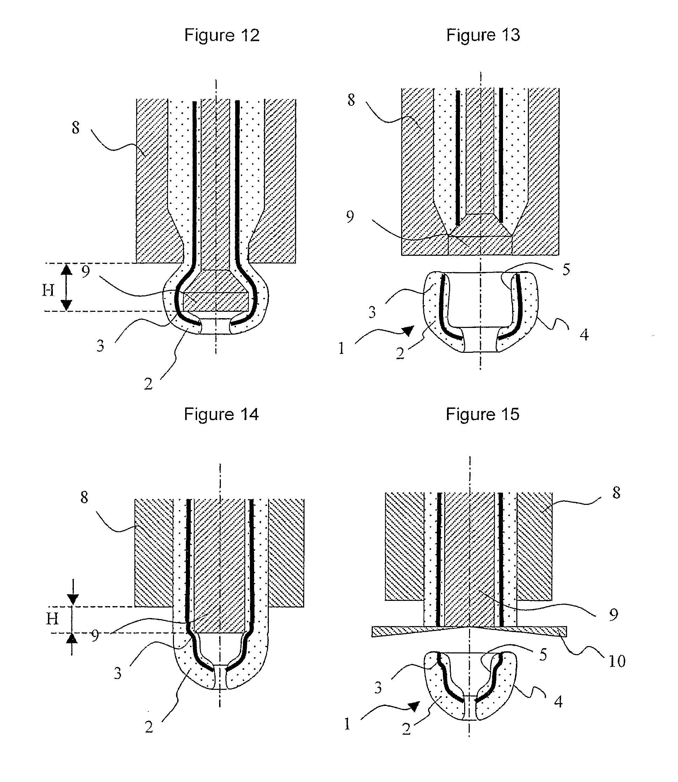

Une première méthode est illustrée figures 12 et 13. Cette méthode consiste à faire une co-extrusion tubulaire multicouche telle qu'illustrée figure 12. L'écoulement multicouche s'écoule dans un outillage comprenant au moins une filière 8 et un poinçon 9. Le poinçon 9 est doté en son extrémité d'un obturateur permettant de couper périodiquement le tube et former les doses. L'écoulement multicouche est créé en amont de l'outillage représenté figure 12 selon les méthodes connues. Les essais soutenant la demande de brevet ont été réalisés avec trois extrudeuses reliées à une tête de co-extrusion. La figure 12 montre la position du poinçon qui dépasse de la filière d'une hauteur H et permet de créer la cavité de ladite dose. A la sortie de l'outillage, l'écoulement s'enroule autour du poinçon et permet de modifier la géométrie de la dose.

Il a été trouvé expérimentalement que l'enroulement de l'écoulement de la matière autour de l'extrémité du poinçon 9 dépend de la hauteur H, de la géométrie de l'obturateur, des résines extrudées ainsi que des mouvements du poinçon 9. L'optimisation de ces paramètres permet de conduire à des doses avec un orifice (figures 4 et 8) ou sans orifice (figure 6).

La figure 13 illustre la fermeture de l'obturateur et la coupe de la dose. En modifiant les paramètres du procédé tels que la vitesse d'ouverture et de fermeture de l'obturateur, le débit d'extrusion, les températures ; ou en modifiant la géométrie de l'outillage, la concavité de la dose peut être optimisée.

Les figures 14 et 15 illustrent un autre procédé pour la réalisation de doses concaves. Ce procédé consiste à créer une co-extrusion tubulaire dans l'outillage représenté figure 14. Cet outillage comprend au moins une filière 8 et un poinçon 9 ; le poinçon 9 dépassant de la filière 8 d'une hauteur H. En fonction de la géométrie de la dose à réaliser, le poinçon 9 est immobile, ou animé d'un mouvement vertical alternatif périodique en phase avec la coupe de la dose. Afin de simplifier l'exposé de l'invention, la figure 15 représente un poinçon et une filière de géométrie cylindrique. L'invention couvre également d'autres géométries d'outillage basées sur le même principe et permettant de conduire à des doses ayant une partie de leur surface concave. La méthode illustrée figure 14 et 15 consiste à extruder à débit constant les matières au travers de l'outillage 8 et 9, et à couper périodiquement la matière expulsée de l'outillage par l'intermédiaire d'un couteau représenté figure 15.

La distance H correspondant à la distance maximale entre les extrémités du poinçon et de la filière, est généralement comprise entre 1 mm et 5 cm.

La coupe de la dose peut être faite selon d'autres méthodes connues. Citons par exemple les couteaux rotatifs pour couper le jonc en sortie d'extrudeuse. Ce type de couteau peut être simultanément utilisé pour transférer la dose dans le moule.

Le transfert de la dose peut se faire par les méthode connues ; comme par gravité ou par l'intermédiaire d'un dispositif de transfert. Le positionnement de la dose dans le moule de compression doit être précis ; et en particulier l'axe de symétrie de la dose doit être aligné avec précision avec l'axe de symétrie de la cavité du moule. Les doses sont comprimées selon l'axe de symétrie de la dose.

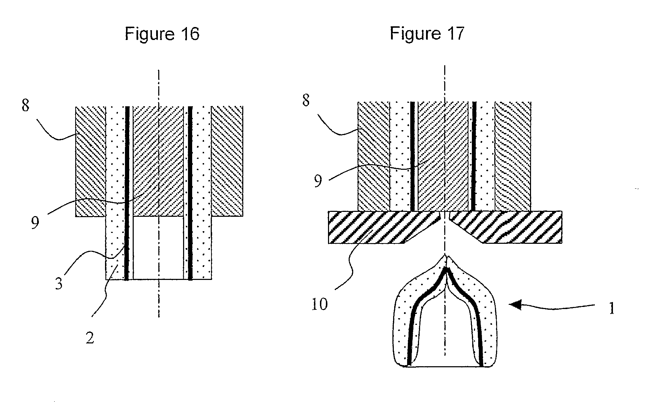

Les figures 16 et 17 illustrent une autre méthode pour réaliser des doses dont une partie de leur surface est concave. Cette méthode consiste à réaliser une dose tubulaire, puis à modifier sa concavité lors de la coupe ou lors du transfert de ladite dose dans le moule de compression. La figure 16 montre l'extrusion multicouche tubulaire au travers de la filière 8 et du poinçon 9. Cette extrusion est faite préférentiellement à débit constant. La figure 17 illustre la coupe de l'extrudât multicouche avec un couteau10. Le mouvement du couteau 10 a pour effet de couper périodiquement l'extrudât et de conjointement fermer l'extrémité de ladite dose 1. Des méthodes similaires pourraient être envisagées pour couper et fermer l'extrémité de la dose simultanément ou séquentiellement.

Les doses multicouches sont extrudées à l'état fondu à des températures adaptées aux résines utilisées. Les doses multicouches restent à l'état fondu pendant l'étape de transfert dans le moule de compression. Les doses sont moulées par compression et l'objet obtenu est refroidi au moins partiellement dans le moule avant éjection.
Dans les exemples présentés ici, les doses et les objets sont de géométrie simple, mais il va de soi que l'invention concerne n'importe quelle géométrie de dose et d'objet.

Les objets obtenus selon l'invention comportent une couche fonctionnelle 3 formant au moins un pli au niveau de la périphérie de l'objet. Des objets comportant également un second pli proche de l'axe de symétrie de l'objet peuvent être obtenus. Une disposition de la couche fonctionnelle en forme de zigzag peut être obtenue dans l'objet.

Il existe de nombreuses dispositions de la couche fonctionnelle 3 dans la dose. Il peut être avantageux de disposer la couche fonctionnelle 3 dans la dose de sorte que ladite couche fonctionnelle 3 forme l'enveloppe d'un corps de révolution centré sur l'axe de symétrie. Lorsque la distance de la couche fonctionnelle 3 à l'axe de symétrie est variable, des objets multicouches avantageux peuvent être obtenus.

L'invention a été décrite avec une seule couche fonctionnelle 3 répartie dans la dose. Des doses comprenant plusieurs couches fonctionnelles 3 peuvent également être utilisées ; lesdites couches fonctionnelles étant toutes centrées sur l'axe de symétrie de ladite dose. Les objets multicouches obtenus sont caractérisés par le fait que les couches fonctionnelles se superposent au moins partiellement, et sont réparties dans tout l'objet.

La réalisation d'emballages ou composants d'emballages pour des usages alimentaires nécessite des propriétés d'hygiène élevées. Il est ainsi souvent souhaitable que la couche fonctionnelle 3 ne soit pas en contact direct avec le produit emballé. Il peut être avantageux d'emprisonner totalement la couche fonctionnelle 3 dans la dose, de sorte que ladite couche fonctionnelle se trouve totalement emprisonnée dans l'objet, ou de sorte que ladite couche fonctionnelle se trouve absente de la partie dudit objet nécessitant des propriétés d'hygiène élevées.
Alternativement, seule une extrémité de la couche barrière peut ne pas être emprisonnée.

## Revendications

1. Dose multicouche de résine synthétique à l'état fondu (1) présentant un axe de symétrie pour la réalisation d'objets multicouches par compression moulage, comprenant une première résine synthétique (2) et au moins une fine couche de résine fonctionnelle (3) emprisonnée au moins en grande partie dans ladite résine (2) ; **caractérisée par le fait qu'**une partie de sa surface (5) est concave, ladite surface concave étant centrée sur l'axe de symétrie.

2. Dose selon la revendication 1 comprenant un orifice, ladite surface concave (5) étant constituée par une partie au moins de la surface interne formée par l'orifice.

3. Dose selon la revendication 2 où l'orifice forme un passage au travers de la dose.

4. Dose selon la revendication 3 où l'orifice forme une cavité ouverte sur une face de la dose (1).

5. Dose (1) selon l'une quelconque des revendications précédentes **caractérisée en ce que** la fine couche de résine fonctionnelle (3) forme elle-même une structure multicouche comprenant une couche de résine barrière emprisonnée entre deux couches de résine adhésive.

6. Objet multicouche obtenu à partir d'une dose multicouche de résine synthétique à l'état fondu (1) selon l'une quelconque des revendications 1 à 5 tel qu'il comporte au moins une portion où la fine couche de résine fonctionnelle (3) forme un pli.

7. Objet multicouche selon la revendication précédente, présentant un axe de symétrie, caractérisé en que la fine couche de résine fonctionnelle (3) forme un corps de révolution centré autour de l'axe de symétrie.

8. Objet multicouche selon la revendication 7 **caractérisé en ce que** ledit corps de révolution est ouvert.

9. Objet multicouche selon la revendication précédente **caractérisé en ce que** ledit corps de révolution comporte une ouverture centrée sur l'axe de symétrie.

10. Objet multicouche selon l'une quelconque des revendications 6 à 9 **caractérisé en ce qu'**il comporte un orifice formant un passage au travers de la dose.

11. Objet multicouche selon l'une quelconque des revendications 6 à 9 **caractérisé en ce qu'**il ne comporte aucun orifice.

12. Objet multicouche selon la revendication 7 **caractérisé en ce que** ledit corps de révolution est fermé.

13. Dispositif pour la fabrication d'une dose multicouche de résine synthétique à l'état fondu (1) selon l'une quelconque des revendications 1 à 5 **caractérisé en ce qu'**il comprend un passage (8) pour l'écoulement linéaire, simultané et co-axial, des résines constituant la dose (1) et des moyens (9) pour modifier la direction d'extrusion de manière à former ladite surface concave (5), lesdits moyens (9) étant montés coulissant à l'intérieur du passage (8).

14. Procédé qui utilise le dispositif selon la revendication 13, de fabrication d'une dose multicouche de résine synthétique à l'état fondu (1) selon l'une quelconque des revendications 1 à 5, par lequel on extrude simultanément et co-axialement les résines constituant la dose (1), initialement selon une direction rectiligne, et que l'on modifie ensuite la direction d'extrusion de manière à former ladite surface concave (5).

## Patentansprüche

1. Mehrschichtige Kunstharzdosis im geschmolzenen Zustand (1) mit einer Symmetrieachse zur Herstellung von mehrschichtigen Gegenständen durch Formpressen, die ein erstes Kunstharz (2) und mindestens eine dünne Funktionsharzschicht (3) enthält, welche zumindest zum großen Teil im Harz (2) eingeschlossen ist, **dadurch gekennzeichnet, dass** ein Teil ihrer Oberfläche (5) konkav ist, wobei die konkave Oberfläche auf die Symmetrieachse zentriert ist.

2. Dosis nach Anspruch 1, die eine Öffnung enthält, wobei die konkave Oberfläche (5) aus mindestens einem Teil der von der Öffnung gebildeten Innenfläche besteht.

3. Dosis nach Anspruch 2, wobei die Öffnung einen Durchgang durch die Dosis bildet.

4. Dosis nach Anspruch 3, wobei die Öffnung einen an einer Seite der Dosis (1) offenen Hohlraum bildet.

5. Dosis (1) nach einem der vorhergehenden Ansprüche, **dadurch gekennzeichnet, dass** die dünne Funktionsharzschicht (3) selbst eine mehrschichtige Struktur bildet, die eine Sperrharzschicht enthält, welche zwischen zwei Haftharzschichten eingeschlossen ist.

6. Mehrschichtiger Gegenstand, der ausgehend von einer mehrschichtigen Kunstharzdosis im geschmolzenen Zustand (1) nach einem der Ansprüche 1 bis 5 erhalten wird, derart, dass er mindestens einen Teil aufweist, in dem die dünne Funktionsharzschicht (3) eine Falte bildet.

7. Mehrschichtiger Gegenstand nach dem vorhergehenden Anspruch mit einer Symmetrieachse, **dadurch gekennzeichnet, dass** die dünne Funktionsharzschicht (3) einen um die Symmetrieachse zentrierten drehsymmetrischen Körper bildet.

8. Mehrschichtiger Gegenstand nach Anspruch 7, **dadurch gekennzeichnet, dass** der drehsymmetrische Körper offen ist.

9. Mehrschichtiger Gegenstand nach dem vorhergehenden Anspruch, **dadurch gekennzeichnet, dass** der drehsymmetrische Körper eine auf die Symmetrieachse zentrierte Öffnung aufweist.

10. Mehrschichtiger Gegenstand nach einem der Ansprüche 6 bis 9, **dadurch gekennzeichnet, dass** er eine Öffnung aufweist, die einen Durchgang durch die Dosis bildet.

11. Mehrschichtiger Gegenstand nach einem der Ansprüche 6 bis 9, **dadurch gekennzeichnet, dass** er keine Öffnung aufweist.

12. Mehrschichtiger Gegenstand nach Anspruch 7, **dadurch gekennzeichnet, dass** der drehsymmetrische Körper geschlossen ist.

13. Vorrichtung zur Herstellung einer mehrschichtigen Kunstharzdosis im geschmolzenen Zustand (1) nach einem der Ansprüche 1 bis 5, **dadurch gekennzeichnet, dass** sie einen Durchgang (8) für das lineare, gleichzeitige und koaxiale Fließen der die Dosis (1) bildenden Harze und Einrichtungen (9) zur Änderung der Extrusionsrichtung enthält, um die konkave Oberfläche (5) zu bilden, wobei die Einrichtungen (9) im Inneren des Durchgangs (8) gleitend montiert sind.

14. Verfahren, das die Vorrichtung nach Anspruch 13 zur Herstellung einer mehrschichtigen Kunstharzdosis im geschmolzenen Zustand (1) nach einem der Ansprüche 1 bis 5 verwendet, durch das gleichzeitig und koaxial die die Dosis (1) bildenden Harze anfangs in einer geradlinigen Richtung extrudiert werden, und dass dann die Extrusionsrichtung geändert wird, um die konkave Oberfläche (5) zu bilden.

## Claims

1. Multilayer dose of synthetic resin in the molten state (1) having an axis of symmetry for the production of multilayer objects by compression moulding, comprising a first synthetic resin (2) and at least one thin layer of functional resin (3) at least largely captive in said resin (2); **characterized in that** a part of its surface (5) is concave, said concave surface being centred on the axis of symmetry.

2. Dose according to Claim 1, comprising an orifice, said concave surface (5) consisting of at least a part of the internal surface formed by the orifice.

3. Dose according to Claim 2, where the orifice forms a passage through the dose.

4. Dose according to Claim 3, where the orifice forms a cavity open on one face of the dose (1).

5. Dose (1) according to any one of the preceding claims, **characterized in that** the thin layer of functional resin (3) itself forms a multilayer structure comprising a layer of barrier resin captive between two layers of adhesive resin.

6. Multilayer object obtained from a multilayer dose of synthetic resin in the molten state (1) according to any one of Claims 1 to 5, such that it comprises at least a portion in which the thin layer of functional resin (3) forms a fold.

7. Multilayer object according to the preceding claim, having an axis of symmetry, **characterized in that** the thin layer of functional resin (3) forms a body of revolution centred around the axis of symmetry.

8. Multilayer object according to Claim 7, **characterized in that** said body of revolution is open.

9. Multilayer object according to the preceding claim, **characterized in that** said body of revolution comprises an opening centred on the axis of symmetry.

10. Multilayer object according to any one of Claims 6 to 9, **characterized in that** it comprises an orifice forming a passage through the dose.

11. Multilayer object according to any one of Claims 6 to 9, **characterized in that** it comprises no orifice.

12. Multilayer object according to Claim 7, **characterized in that** said body of revolution is closed.

13. Device for manufacturing a multilayer dose of synthetic resin in the molten state (1) according to any one of Claims 1 to 5, **characterized in that** it comprises a passage (8) for the linear, simultaneous and coaxial flow of the resins forming the dose (1) and means (9) for modifying the direction of extrusion so as to form said concave surface (5), said means (9) being mounted to slide inside the passage (8).

14. Method which utilizes the device according to Claim 13, for manufacturing a multilayer dose of synthetic resin in the molten state (1) according to any one of Claims 1 to 5, by which the resins forming the dose (1) are extruded simultaneously and coaxially, initially in a rectilinear direction, and the direction of extrusion is then modified so as to form said concave surface (5).
